# EUROPEAN PATENT APPLICATION

(11) **EP 4 831 960 A1**
(43) Date of publication of application: **28.10.2026**
(21) Application number: 26166412.2
(22) Date of filing: 20.03.2026
(51) Int. Cl.: G08G 1/14, B60W 30/06, B62D 15/02, H04W 4/44

(54) **SYSTEMS AND METHODS FOR AUTOMATED MARSHALLING OF VEHICLE**

(30) Priority: 24.04.2025 FI 20253150
(71) Applicant: Unikie Oy, 33720 Tampere (FI)
(72) Inventor: Salo, Jouni, 00200 Helsinki (FI)
(74) Representative: Moosedog Oy

(57) **Abstract**

Disclosed is a system (100) and a method (200) for automated marshalling of a vehicle (102) having a remote parking interface (103). The system comprises a remote device (104), at least one control unit (106) communicably coupled to the remote device, and a plurality of sensors (108) arranged in an operational area (110) of the vehicle. The at least one control unit processes tracking data collected by the sensors to determine a digital map of the operational area, a current location of the vehicle and a location of a given parking area (112). The at least one control unit determines routing information based on the digital map and location information, and navigates the vehicle to the given parking area using the remote device. The remote device converts commands from the at least one control unit into standardized control signals compatible with the remote parking interface of the vehicle.

## Description

### TECHNICAL FIELD

The present disclosure relates to systems for automated marshalling of vehicles having remote parking interfaces. Furthermore, the present disclosure relates to methods for automated marshalling of vehicles having remote parking interfaces.

### BACKGROUND

In modern transportation and logistics environments, efficient management of vehicle parking and movement is becoming increasingly important as the volume of vehicles in restricted operational areas continues to grow. These operational areas, such as logistics centres, automotive manufacturing facilities, rental car depots, and commercial parking structures, often require frequent repositioning of vehicles to optimize space utilization and operational efficiency. Traditional vehicle movement within such environments typically involves manual operation by drivers who physically enter each vehicle, start the engine, and drive to the designated location, a process that is labour-intensive, time-consuming, and prone to human error.

Recent technological advancements have led to the development of remote parking systems that allow vehicles to be controlled from outside through standardized interfaces defined by protocols such as ISO 12768, ISO 23374-1, and UNECE R79. These protocols establish parameters for remote control of vehicle parking functions, including steering, acceleration, braking, and gear selection. However, these remote parking systems are primarily designed for individual vehicle operation within strict limitations, such as the UNECE R79 requirement that restricts remote operation to a maximum distance of six meters from the operator and limits vehicle speed to walking pace. The protocols are further constrained by requirements for continuous human supervision, which significantly limits their application in large-scale automated marshalling operations where multiple vehicles need to be coordinated simultaneously.

Current solutions for vehicle marshalling include manufacturer-specific remote parking systems that operate via proprietary smartphone applications or key fobs, infrastructure-based automated parking that depends on direct vehicle-to-infrastructure communication, and various direct control methods that require embedded interfaces in vehicles. These solutions, while partially addressing the need for remote vehicle control, suffer from significant limitations in terms of scalability, standardization, and operational efficiency. Manufacturer-specific systems are confined to their respective vehicle ecosystems and cannot integrate with broader infrastructure-based marshalling solutions. Infrastructure-dependent systems require vehicles to support specific communication technologies, which many existing vehicles do not possess. Direct control methods demand extensive vehicle modifications, making them impractical for diverse fleets with varying makes and models.

Existing approaches also face challenges related to environmental perception and safety management. Most remote parking systems do not inherently include environmental awareness capabilities, leaving a gap in the safety infrastructure necessary for reliable autonomous operations. There is no standardized method to integrate perception technologies such as lidars, cameras, radars, and vehicle-to-everything (V2X) communication systems to ensure safety coverage during automated marshalling operations. This limitation becomes particularly important in high-density environments where multiple vehicles operate in close proximity, and the risk of collisions or operational conflicts increases significantly.

Therefore, in light of the foregoing discussion, there exists a need to overcome the aforementioned drawbacks associated with conventional vehicle marshalling approaches. Specifically, there is a need for a system and method that can bridge standardized vehicle control interfaces and infrastructure-based marshalling commands, while ensuring compliance with regulatory requirements and maintaining high levels of operational safety and efficiency.

### SUMMARY

The aim of the present disclosure is to provide a system and a method to enable automated marshalling of vehicles having remote parking interfaces.

The aim of the disclosure is achieved by a system and a method for automated marshalling of a vehicle having a remote parking interface as defined in the appended independent claims to which reference is made to.

The embodiments of the present disclosure substantially enable to improve regulatory compliance, operational safety, and efficiency in managing vehicle movements in controlled environments.

The disclosed system incorporates a remote device configured to act as a protocol converter between infrastructure-based marshalling commands and standardized vehicle control signals. The system also comprises a control unit that receives and processes environmental data from a plurality of sensors distributed throughout the operational area. The processed data enables the generation of a digital map that facilitates precise tracking and autonomous navigation of vehicles.

The control unit determines optimal routing information and issues marshalling commands to navigate vehicles from their current positions to designated parking locations. The remote device converts these commands into control signals compatible with the vehicle's native remote parking interface, enabling movement without human intervention or vehicle modifications. The system further ensures compliance with regulatory constraints, such as distance and speed limitations defined in UNECE R79, while maintaining safety through real-time environmental perception.

Embodiments of the disclosure include additional safety mechanisms such as dynamic safety zones, integration of onboard perception sensors, and coordination of multiple vehicles for large-scale operations. The system may also include an operator interface that visualizes the operational area and provides oversight capabilities.

Additional aspects, advantages, features, and objects of the present disclosure would be made apparent from the drawings and the detailed description of the illustrative embodiments constructed in conjunction with the appended claims that follow.

Throughout the description and claims of this specification, the words "comprise", "include", "have", and "contain" and variations of these words, for example "comprising" and "comprises", mean "including but not limited to", and do not exclude other components, items, integers, or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 is a schematic illustration of a system for automated marshalling of a vehicle having a remote parking interface, in accordance with an embodiment of the present disclosure; and
FIG. 2 is a flow diagram of steps of a method for automated marshalling of a vehicle having a remote parking interface, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a system for automated marshalling of a vehicle having a remote parking interface, the system comprising:
a remote device configured to interface with the remote parking interface of the vehicle;
at least one control unit communicably coupled to the remote device; and
a plurality of sensors arranged in an operational area in which the vehicle is present,
wherein the at least one control unit is configured to:
   process tracking data, collected by the plurality of sensors, to determine a digital map of the operational area and information pertaining to a current location of the vehicle and a location of a given parking area where the vehicle is to be navigated;
   determine routing information based on the digital map of the operational area and the information pertaining to the current location of the vehicle and the location of the given parking area; and
   navigate, using the remote device, the vehicle from its current location to the location of the given parking area, based on the routing information,
characterised in that the remote device serves as a protocol converter between standardized vehicle control signals and infrastructure-based marshalling commands, and the remote device converts commands from the at least one control unit into standardized control signals compatible with the remote parking interface of the vehicle.

The present system addresses the limitations of conventional vehicle marshalling approaches by integrating remote device technology with infrastructure-based sensing and control capabilities to enable automated vehicle marshalling while maintaining compliance with regulatory standards. The system employs the remote device that serves as a protocol converter between standardized vehicle control signals and infrastructure-based marshalling commands, thereby facilitating communication between vehicles equipped with remote parking interfaces and the automated marshalling infrastructure.

In a second aspect, the present disclosure provides a method for automated marshalling of a vehicle having a remote parking interface, the method comprising:
processing tracking data, collected by a plurality of sensors arranged in an operational area in which the vehicle is present, to determine a digital map of the operational area and information pertaining to a current location of the vehicle and a location of a given parking area where the vehicle is to be navigated;
determining routing information based on the digital map of the operational area and the information pertaining to the current location of the vehicle and the location of the given parking area;
   and
navigating, using a remote device, the vehicle from its current location to the location of the given parking area, based on the routing information,
characterised in that the method further comprises:
   establishing a connection between the remote device and the remote parking interface of the vehicle, wherein the remote device serves as a protocol converter between standardized vehicle control signals and infrastructure-based marshalling commands; and
   converting, at the remote device, commands into standardized control signals compatible with the remote parking interface of the vehicle.

The present method enables automated marshalling of vehicles without requiring modifications to the vehicles' existing systems, thereby ensuring compatibility with a wide range of vehicle makes and models equipped with remote parking interfaces. The method enhances safety during marshalling operations through environmental perception capabilities that continuously monitor the operational area and detect potential hazards. The method increases operational efficiency by facilitating parallel processing of multiple vehicle movements, reducing the time and labour required for vehicle repositioning.

In the present system, the remote device constitutes a hardware module specifically configured to establish and maintain communication with the vehicle's existing remote parking interface through multiple potential connection methods. The internal architecture of the remote device includes communication interfaces supporting various protocols like CAN bus, OBD-II, Bluetooth, Wi-Fi, and cellular technologies to ensure compatibility with diverse vehicle implementations without requiring modifications to existing vehicle systems. The remote device incorporates the protocol conversion engine comprising dedicated processing hardware and firmware that translates generalized marshalling commands into vehicle-specific control signals compatible with standardized protocols. The protocol converter maintains mapping tables and conversion algorithms that ensure correct translation of abstract movement instructions into the specific message formats, parameter ranges, and timing sequences expected by the vehicle's native control system.

The remote device enables integration between infrastructure-based marshalling systems and vehicles with standardized remote parking capabilities. This connectivity approach significantly expands the range of vehicles that can participate in automated marshalling operations, as compatibility requires only standard remote parking interfaces rather than specialized hardware installations or software modifications. The protocol conversion capability abstracts the complexity of diverse vehicle control implementations, presenting a unified interface to the marshalling infrastructure while handling all vehicle-specific adaptations internally.

The control unit comprises a computing system with processing hardware, memory resources, and communication interfaces specifically configured for real-time coordination of automated marshalling operations. This central processing element executes software modules implementing algorithms for environmental perception, object tracking, path planning, vehicle coordination, and command generation that collectively enable autonomous vehicle movement control. The control unit maintains bidirectional communication with the remote device through secure, high-bandwidth channels that enable continuous exchange of command data and status information.

The control unit processes inputs from multiple data sources and implementing the decision-making logic that coordinates all aspects of vehicle movement. The processing capabilities of the control unit transform sensor data into actionable vehicle control decisions, abstracting the complexity of environmental perception and path planning from individual vehicle interfaces. Such architecture enables operational capabilities such as traffic management, resource optimization, and collision avoidance that may not be possible to achieve with isolated control systems.

The plurality of sensors comprises a network of perception devices strategically positioned throughout the operational area to provide environmental monitoring. These sensors may include various technologies such as lidars, cameras, radar systems, and ultrasonic detectors, each offering complementary capabilities in terms of detection range, resolution, and environmental resilience. The sensor are placed to ensure that every location within the operational area is observed by multiple sensors simultaneously, with redundant coverage of all operational zones, eliminating blind spots and providing alternative perception angles that enhance detection reliability. Each sensor connects to the control unit through data transmission channels. The sensor network operates continuously, generating real-time data streams that capture the positions and movements of all objects within the operational area, including vehicles, infrastructure elements, and potential obstacles.

The distributed sensor network monitors the entire operational environment independently from any individual vehicle's perspective, enabling situational assessment beyond the limitations of vehicle-mounted sensors. This infrastructure-based perception approach provides consistent monitoring quality throughout the operational area regardless of vehicle positions or movements, maintaining reliable object detection even in complex scenarios with multiple moving elements. This independent environmental monitoring capability provides an additional safety layer beyond vehicle-specific systems, detecting potential hazards or trajectory conflicts that might not be visible from individual vehicle perspectives.

To further improve the reliability and adaptability of the environmental perception subsystem, the present disclosure optionally incorporates machine learning algorithms within the perception module. These algorithms are designed to enhance object detection, classification, and trajectory prediction by learning from historical movement data and real-time sensor input. In particular, the perception module may apply supervised or semi-supervised learning techniques to improve the accuracy of object recognition in complex environments, such as distinguishing between stationary infrastructure, moving vehicles, and temporary obstacles. Additionally, predictive models trained on prior marshalling scenarios may be used to anticipate the behaviour of dynamic objects, thereby enabling more proactive collision avoidance strategies. Over time, the system can adapt to site-specific characteristics, environmental conditions, and operational patterns, optimizing both detection precision and decision-making robustness. The machine learning algorithms may run locally on processing hardware embedded in the remote device, or on a centralized server component of the marshalling control infrastructure, with model updates transmitted via secure communication links.

The control unit implements data processing pipelines that transform raw sensor inputs into digital representation of the operational environment through multi-stage algorithms including noise filtering, object detection, classification, and tracking. This processing system combines data streams from multiple sensors using sensor fusion techniques that align observations from different perspectives into a unified coordinate system with consistent object representations. The digital map generation process creates and maintains a detailed spatial model of the operational area, incorporating both static elements such as infrastructure and dynamic elements such as vehicles and movable objects with their associated positional certainty estimates. The system employs specialized localization algorithms that determine the current position and orientation of the vehicle within this digital map, using pattern matching between detected features and map landmarks combined with vehicle movement history to achieve positional accuracy. Further, the parking area location identification process combines pre-defined facility mapping data with real-time observations to confirm availability and exact boundaries of the target parking location, considering factors such as current occupancy and access path clearance.

This environmental modelling approach enables the system to maintain complete situational awareness across the entire operational area, tracking multiple dynamic elements simultaneously while understanding their spatial relationships and movement patterns. The fusion of data from multiple independent sensors enhances detection reliability through complementary sensing capabilities, maintaining accurate environmental representation. This detailed spatial understanding enables detailed path planning and obstacle avoidance strategies that may be impossible with limited or fragmented environmental data, thereby enhancing both the safety and efficiency of automated marshalling operations.

The control unit executes path planning algorithms that analyse the digital map to identify multiple potential routes between the vehicle's current position and the target parking area, evaluating each option against multiple optimization criteria. The routing process considers various constraints including vehicle dimensions, turning radius limitations, clearance requirements, surface conditions, and potential obstacles to ensure the selected path remains physically navigable throughout the entire journey. The generated routing information includes a complete trajectory with waypoints, velocity profiles, steering angles, and timing parameters that collectively define the movement path the vehicle should follow to reach its destination. The path planning process incorporates contextual awareness of the specific vehicle's manoeuvring capabilities, applying appropriate constraints to the route generation process to ensure the planned path remains within the operational capabilities of the target vehicle.

This automated path planning approach generates optimized routes that balance multiple competing factors such as time efficiency, energy consumption, and safety margins based on programmable priority weights that can adapt to different operational contexts. The trajectory specifications eliminate directional ambiguities that might arise from simplified routing instructions, providing complete guidance information that supports autonomous execution without requiring additional pathfinding decisions during movement. The routing functionality effectively solves the complex spatial problem of finding optimal paths through dynamically changing environments with multiple constraints, enabling efficient marshalling operations that minimize resource usage while maintaining safety margins.

The control unit implements a real-time navigation control loop that continuously issues movement commands to guide the vehicle along the planned route, translating the abstract routing plan into specific control instructions transmitted to the remote device. This navigation process incorporates constant position monitoring that compares the vehicle's actual location with the intended path, calculating corrective adjustments when deviations are detected to maintain accurate trajectory following throughout the movement operation. The system applies dynamic speed control that adjusts the vehicle's velocity based on upcoming path segments, reducing speed before sharp turns or narrow passages and increasing speed on straightaways when safety margins permit. The navigation module includes obstacle detection and avoidance capabilities that continuously monitor the path ahead for unexpected objects, implementing appropriate speed adjustments or path modifications when potential collision risks are identified. The control unit maintains constant communication with the remote device throughout the navigation process, transmitting updated command sequences as needed based on the vehicle's progress and any environmental changes that might affect the planned route.

This controlled movement approach ensures consistent path following regardless of environmental complexities, maintaining accurate trajectory adherence even when navigating through tight spaces or executing complex manoeuvres such as multi-point turns. The continuous correction mechanism prevents cumulative position errors that might otherwise cause significant path deviations during extended movements, while the adaptive speed mechanism enhances both safety and efficiency by automatically adjusting vehicle velocity based on path characteristics and environmental conditions. The integration of real-time obstacle detection with the navigation process creates a responsive movement control system that can adapt to dynamic environmental changes, enhancing operational resilience compared to static path following approaches.

The remote device implements a protocol translation mechanism that receives generalized marshalling commands from the control unit and transforms them into formatted control signals that conform to the specific requirements of the vehicle's remote parking interface. This conversion process involves multiple processing stages including command parsing, parameter scaling, protocol-specific message formatting, timing adjustment, and verification checking to ensure the transformed signals meet all requirements of the target protocol standard. The command conversion process incorporates vehicle-specific adaptations that account for variations in how different manufacturers implement the standardized protocols, including adjusting signal characteristics to match the specific expectations of the target vehicle's control systems.

This translation function eliminates the need for the control unit to maintain detailed knowledge of vehicle-specific control protocols, allowing a consistent command interface to be used across diverse vehicle types while delegating all protocol-specific adaptations to the remote device. The standardized signal generation ensures that all vehicle control operations remain compliant with established protocols and regulatory requirements, maintaining consistent behaviour across different vehicle makes and models while preserving all safety-related constraints defined in the relevant standards.

Optionally, the system is configured to enforce a maximum vehicle movement distance of six meters from the remote device and to limit a movement speed of the vehicle to walking speed, in accordance with UNECE R79 regulations, and wherein the system is further configured to halt the vehicle upon detection of a communication failure or a safety hazard within the operational area.

The system implements safety and regulatory compliance measures to ensure that all vehicle movements adhere to established standards and maintain high levels of operational safety. One of the key regulatory requirements addressed by the system is the UNECE R79 specification, which mandates a maximum vehicle movement distance of six meters from the remote control device during remote operation. The system enforces this distance limitation through continuous monitoring of the spatial relationship between the remote device and the vehicle using positioning technologies such as GPS, Ultra-Wideband (UWB) ranging, or optical tracking systems. If the distance between the remote device and the vehicle approaches the six-meter threshold, the system automatically adjusts the vehicle's movement to prevent exceeding this regulatory limit. This enforcement mechanism may involve reducing the vehicle's speed, modifying its trajectory, or completely halting its movement until the distance constraint is satisfied again.

In accordance with UNECE R79 regulations, the system also imposes strict speed limitations on vehicle movements, restricting the vehicle to walking speed during all marshalling operations. The system achieves this speed limitation through real-time monitoring and regulation of the vehicle's velocity using data from both onboard vehicle systems and external sensors in the operational area. The control commands sent to the vehicle's remote parking interface include specific velocity parameters that are calibrated to ensure that the vehicle never exceeds the walking speed threshold, typically defined as approximately 5-6 kilometres per hour. The system incorporates dynamic speed control algorithms that adjust the vehicle's acceleration and deceleration profiles based on environmental conditions. These algorithms take into account factors such as the presence of nearby obstacles, surface conditions, and the specific characteristics of the vehicle to determine appropriate speed settings for each segment of the marshalling operation.

The system further incorporates safety monitoring capabilities that enable immediate intervention in the event of a communication failure or safety hazard detection. If any interruption or degradation in communication is detected, the system automatically initiates a controlled halt of the vehicle to prevent potentially unsafe operation under compromised communication conditions. Similarly, when a safety hazard is detected, the system employs a response strategy that may include speed reduction, path modification, or complete vehicle halting depending on the nature and severity of the hazard. The vehicle halting procedure follows a controlled deceleration profile that brings the vehicle to a safe stop while maintaining stability and minimizing disruption to other operations in the area. This safety approach ensures that the automated marshalling operations remain safe and compliant with regulatory requirements under all operational conditions, protecting both the vehicle and the surrounding environment from potential harm.

Optionally, the remote device comprises one or more perception sensors configured to monitor surroundings of the vehicle, wherein data from the one or more perception sensors is used by the at least one control unit to supplement the tracking data collected by the plurality of sensors.

The remote device is equipped with one or more perception sensors that provide localized environmental monitoring capabilities, enhancing the system's ability to detect and respond to objects in the immediate vicinity of the vehicle. The perception sensors are positioned on the remote device to provide coverage of the vehicle's surroundings. These onboard perception sensors may include various sensing technologies such as lidars, cameras, radars, ultrasonic sensors, or a combination thereof, each offering distinct advantages in terms of detection range, resolution, and environmental resilience. For example, lidar sensors mounted on the remote device can provide high-resolution 3D point cloud data of the environment, enabling precise detection of objects and structural features around the vehicle. Cameras can provide visual information for object recognition and classification, while radar sensors provide reliable detection capabilities in adverse weather conditions such as fog, rain, or snow. Ultrasonic sensors are particularly effective for close-range detection, making them valuable for precise positioning during the final stages of parking manoeuvres. This diverse sensor suite ensures robust perception capabilities across various operational conditions and environmental contexts.

The data collected by the perception sensors on the remote device is transmitted to the at least one control unit, where it is integrated with the tracking data from the fixed sensors in the operational area to create a more comprehensive understanding of the environment. This sensor fusion approach combines the advantages of both sensor systems: the fixed sensors provide broad coverage of the entire operational area with a stable reference frame, while the mobile sensors on the remote device offer detailed, up-close monitoring of the vehicle's immediate surroundings. The integration of these data streams is achieved through sensor fusion algorithms that align the different coordinate systems, temporal synchronization of data from different sources, and complementary filtering techniques that combine the strengths of each sensor type. The fused sensor data provides a more complete and accurate representation of the operational environment than would be possible with either sensor system alone, enabling better object detection, improved position estimation, and enhanced situational awareness.

Optionally, the at least one control unit is further configured to: determine a safety zone surrounding the vehicle based on at least one vehicle parameter; detect when a position of an object present in the operational area lies within the safety zone; and when it is detected that the position of the object lies within the safety zone, instruct the remote device to decrease a speed of the vehicle to prevent a collision between the vehicle and the object.

The system implements a dynamic safety zone mechanism that establishes a virtual boundary around the vehicle during automated marshalling operations. This safety zone creates a buffer space around the vehicle in which the presence of objects triggers preventive actions before a potential collision can occur. The safety zone is determined based on multiple vehicle parameters including the vehicle's dimensions, current speed, braking capabilities, steering responsiveness, etc. The dimensions of the safety zone are continuously recalculated in real-time as the vehicle's state changes, expanding when the vehicle moves at higher speeds to account for increased stopping distances and contracting at lower speeds to allow for more precise manoeuvring in confined spaces. Additionally, the system may adjust the safety zone based on environmental factors such as surface conditions, visibility, and the specific characteristics of the operational area. For instance, the safety zone may be expanded on slippery surfaces where braking distances are longer or in areas with limited visibility where early detection of potential hazards is important.

The system employs object detection and tracking algorithms to identify when objects enter or approach the established safety zone. The plurality of sensors continuously scan the operational area, generating a real-time representation of all objects in the environment. Each detected object is classified based on its characteristics such as size, shape, position, and velocity, allowing the system to distinguish between different types of objects such as other vehicles, fixed infrastructure, pedestrians, or temporary obstacles. The position and trajectory of each object are tracked in relation to the vehicle's safety zone, with particular attention to objects that are moving on intersecting paths with the vehicle. When an object's position is detected within the safety zone or when its projected trajectory indicates an entry into the safety zone, the system flags this as a potential collision risk. The detection process incorporates predictive elements that anticipate the future positions of both the vehicle and dynamic objects based on their current trajectories and historical movement patterns, enabling the system to identify potential safety zone violations before they actually occur. This predictive capability is especially valuable for proactive collision avoidance with moving objects, as it provides additional time for the system to implement appropriate mitigation measures.

Upon detecting an object within the vehicle's safety zone, the system initiates a response strategy to prevent a collision while maintaining operational efficiency. The response mechanism involves instructing the remote device to decrease the speed of the vehicle, with the magnitude of the speed reduction proportional to the proximity and relative velocity of the detected object. This approach allows the system to balance safety considerations with operational efficiency, applying only the necessary level of intervention based on the specific characteristics of each situation. In scenarios where the object is at the outer boundary of the safety zone and moving away from the vehicle's path, a minor speed reduction might be sufficient. In contrast, when an object is detected within the safety zone or moving rapidly toward the vehicle's projected path, a more substantial speed reduction or complete stop might be implemented.

Optionally, the at least one control unit is further configured to: coordinate automated marshalling of multiple vehicles within the operational area; and dynamically adjust the routing information for each vehicle based on positions and movements of other vehicles in the operational area.

The system facilitates coordination of multiple vehicles within the operational area, enabling efficient fleet-wide marshalling operations. The at least one control unit implements multi-vehicle coordination algorithms that manage the simultaneous movement of numerous vehicles within the shared operational space. These algorithms consider the positions, states, destinations, and priorities of all vehicles in the operational area to develop an integrated movement plan that maximizes efficiency while ensuring safety. The coordination process begins with the registration of each vehicle in the system, establishing a digital identity that includes the vehicle's physical characteristics, communication capabilities, and current operational status. The system maintains a real-time database of all registered vehicles, tracking their positions, movement states, battery levels, and assigned destinations. Based on this understanding of the fleet's status, the system can prioritize vehicle movements according to various operational criteria such as urgency, resource availability, or energy optimization. For example, vehicles with time constraints might be given movement priority, while vehicles with low battery levels might be directed to charging stations before other destinations. This centralized coordination approach eliminates the inefficiencies and potential conflicts that would arise from independently controlled vehicle movements, enabling fleet operations that maximize throughput and resource utilization within the operational area.

Such multi-vehicle coordination capability includes traffic management functions that prevent conflicts and bottlenecks during simultaneous vehicle movements. The coordinated routing approach considers both the current positions of all vehicles and their projected trajectories over time, identifying potential intersection points where vehicles might attempt to occupy the same space simultaneously. When such potential conflicts are detected, the system implements routing adjustments to ensure temporal separation of vehicles at intersection points. These adjustments might involve modifying the departure timing of vehicles, assigning different routes to avoid spatial overlap, or adjusting vehicle speeds to ensure that multiple vehicles pass through common areas at different times.

The dynamic nature of multi-vehicle operations requires continuous adjustment of routing information in response to the evolving state of the operational area. The at least one control unit constantly monitors the positions and movements of all vehicles and updates the routing information for each vehicle as needed to maintain efficient and safe operations. These dynamic adjustments occur in response to various triggers, such as the introduction of new vehicles into the operational area, changes in vehicle priorities or destinations, the completion of marshalling operations that free up previously occupied spaces, or the detection of unexpected obstacles that require route modifications. This dynamic routing adjustment capability ensures that the system can respond effectively to changing operational conditions, maintaining optimal fleet movement even as the environment evolves over time.

Optionally, the system further comprises an operator unit communicably coupled to the at least one control unit, wherein an operator of the operator unit is provided with a user interface, wherein the user interface displays at least one of: the digital map of the operational area, the routing information, the current location of the vehicle, the location of the given parking area, and respective locations of other vehicles in the operational area.

The system incorporates the operator unit that provides human oversight and intervention capabilities for the automated marshalling operations. The operator unit serves as a central monitoring and control station, providing authorized personnel a view of all system activities and the ability to intervene when necessary. The operator unit is communicably coupled to the at least one control unit for real-time data exchange. The operator unit may be implemented in various forms, including fixed workstations in a control room, mobile devices such as tablets or smartphones for operators who need to move throughout the facility, or web-based interfaces that allow remote monitoring and control from any authorized location.

The user interface provided to the operator provides a visualization of the operational environment, enabling informed oversight of all automated marshalling activities. The digital map display presents a top-down view of the entire operational area showing objects such as vehicles, infrastructure, pedestrians, and obstacles. The interface highlights key information such as the current locations of all vehicles in the operational area, clearly marking their identities, statuses, and movement states. Vehicles undergoing active marshalling operations are visually distinguished from stationary vehicles, with additional indicators showing their assigned destinations and planned routes. The parking areas are clearly delineated on the map, with visual cues indicating their occupancy status, accessibility, etc.

The operator interface includes functional components that facilitate human intervention in the automated marshalling operations when necessary. The routing information for each vehicle is accessible through the interface, allowing the operator to review planned paths, anticipated arrival times, and potential conflict points before or during execution. The interface provides mechanisms for the operator to manually override automated decisions if operational needs or safety considerations require it, such as the ability to modify planned routes, adjust movement priorities, or halt specific vehicles if unexpected situations arise.

Additionally, the interface delivers status notifications and alerts that draw the operator's attention to events requiring human awareness or intervention, such as communication failures, unexpected obstacles, regulatory compliance issues, or system anomalies. Such user interface design ensures that the human operator has all the information and control capabilities necessary to maintain effective oversight of the automated marshalling system.

Optionally, the remote device is implemented as at least one of: a self-powered mobile unit that can be physically attached to the vehicle; a vehicle-powered unit that draws power from the vehicle through a connection with the remote parking interface; and a stationary unit positioned within the operational area that wirelessly interfaces with the remote parking interface of the vehicle.

The remote device of the system may be implemented in various forms to accommodate diverse operational requirements and vehicle types. When implemented as the self-powered mobile unit, the remote device functions as an autonomous control module that can be physically attached to the vehicle during marshalling operations. This implementation includes an independent power supply, typically in the form of rechargeable batteries that provide sufficient energy for extended periods of operation without requiring external power sources. This implementation offers flexibility, as a single remote device can be sequentially deployed across multiple vehicles, reducing the overall system cost when compared to permanent vehicle-specific installations. When implemented as the vehicle-powered unit, the remote device uses the vehicle's electrical system as a power source. This configuration eliminates the need for independent power management within the remote device, resulting in a more compact and lightweight unit that can operate without battery constraints. When implemented as the stationary unit, the remote device is positioned at fixed locations within the operational area, establishing wireless connections with vehicles as they enter the device's operational range. This configuration typically involves a network of remote devices distributed throughout the operational area, with each device responsible for controlling vehicles within its designated zone. The stationary units are permanently installed at strategic locations such as entrances, intersections, or near parking areas, and are typically connected to facility power infrastructure for continuous operation. This implementation eliminates the need for physical attachment or detachment procedures during marshalling operations, streamlining the process flow and reducing operational complexity.

Each implementation approach offers distinct advantages for different operational contexts, and the system's architecture supports flexible deployment of any combination of these implementations within a single operational area. This adaptability enables the system to be tailored to specific facility requirements, vehicle characteristics, and operational objectives, maximizing both effectiveness and efficiency. For example, a facility might deploy stationary units in high-traffic areas while using mobile units for occasional marshalling operations in peripheral zones. Alternatively, vehicle-powered implementations might be preferred for regularly marshalled vehicles within the facility, while self-powered mobile units could be used for visiting vehicles or special handling cases. This flexible implementation strategy ensures that the system can be optimized for specific operational contexts while maintaining consistent functionality and user experience across the various deployment configurations.

Optionally, the remote device is adapted to be mounted on an autonomous mobile robot that is configured to approach the vehicle before establishing a connection with the remote parking interface of the vehicle.

Such autonomous mobile robot serves as an independent platform for the remote device. The autonomous mobile robot may incorporate navigation and perception systems that enable it to approach vehicles with safety, such as lidars, cameras, ultrasonic sensors, and potentially radar systems that collectively provide a detailed understanding of the surrounding environment. The autonomous mobile robot may utilize localization and path planning algorithms that combine data from onboard sensors with facility maps and potentially external reference markers to generate efficient routes to target vehicles while considering factors such as distance, obstacle density, surface conditions, and traffic patterns within the operational area. Such mobility system enables the robot to independently approach vehicles designated for marshalling operations, positioning itself optimally for establishing a connection with the vehicle's remote parking interface.

When a marshalling operation is initiated, the control unit transmits the target vehicle's location and identifying characteristics to the robot, which then navigates to the specified position. Upon reaching the vicinity of the target vehicle, identify the specific vehicle from potentially multiple vehicles in the area; positions itself at the optimal location for establishing a connection with the vehicle's remote parking interface; and then initiate physical docking with a connection port on the vehicle or establishing a wireless communication link depending on the vehicle's interface specifications. After establishing the initial connection, the remote device mounted on the robot performs authentication and handshaking procedures with the vehicle's systems to establish a secure control channel. Once the connection is successfully established and verified, the robot transmits confirmation to the control unit, which can then begin issuing marshalling commands that will be converted by the remote device into standardized control signals for the vehicle. This autonomous approach and connection capability eliminates the need for human operators to physically position control devices near vehicles, significantly enhancing the efficiency and scalability of the marshalling operations by allowing a single robot to sequentially service multiple vehicles across the operational area.

Optionally, the remote device is configured to communicate with the remote parking interface of the vehicle using at least one of: a wired connection and a wireless connection.

When utilizing a wired connection, the remote device establishes a direct physical link with the vehicle's remote parking interface through standardized or manufacturer-specific connection ports. The wired connection implementation includes adaptable interface hardware that can accommodate various connector types commonly found in vehicle systems, such as OBD-II ports, Controller Area Network (CAN) bus access points, or proprietary diagnostic interfaces specific to certain vehicle manufacturers. The wired communication pathway supports high-bandwidth, low-latency data exchange with minimal susceptibility to interference, enabling real-time control of vehicle functions. Further, the remote device supports wireless communication with vehicle remote parking interfaces, offering enhanced deployment flexibility when physical connections are impractical or undesirable. The wireless implementation leverages various communication protocols depending on the specific requirements of the application and the capabilities of the target vehicle. Short-range wireless technologies such as Bluetooth provide energy-efficient connectivity suitable for close-proximity operations, while Wi-Fi connections offer higher bandwidth capabilities for applications requiring richer data exchange. In scenarios demanding extended range capabilities, the remote device may incorporate dedicated radio frequency communication systems operating on specific frequency bands allocated for vehicle control applications.

The dual-mode communication capability of the remote device enables operational adaptability across diverse vehicle types and deployment scenarios. The system can dynamically select the optimal connection method based on multiple factors including vehicle compatibility, environmental conditions, security requirements, and operational preferences. The flexibility to utilize either connection method significantly expands the range of vehicles that can be integrated into the automated marshalling system, as the remote device can adapt to the specific interface capabilities of each target vehicle. This adaptability is particularly valuable in mixed-fleet environments where vehicles from multiple manufacturers with varying connectivity specifications may need to be managed within a single operational framework.

Optionally, the remote device converts the commands from the at least one control unit into the standardized control signals that conform to automated parking protocol standards, wherein the automated parking protocol standards comprise at least one of: ISO 12768, ISO 23374-1, and UNECE R79, and wherein the remote device employs at least one of: CAN bus, OBD-II, Bluetooth, Wi-Fi, 5G, 6G, V2X, and Ethernet communication protocols to interface with the vehicle.

The remote device incorporates protocol conversion mechanisms that transform generalized marshalling commands into standardized control signals specifically tailored to the vehicle's native communication framework. For this purpose, the remote device protocol implements a translation engine that maintains compatibility with multiple automated parking protocol standards, including ISO 12768, ISO 23374-1, and UNECE R79. These standards define the parameters and specifications for remote parking operations, establishing the technical framework for reliable vehicle control. The ISO 12768 standard specifically addresses automated valet parking systems, defining the communication protocols and safety requirements for remote control of parking functions. Similarly, ISO 23374-1 establishes guidelines for automated parking systems with broader application scope. UNECE R79 regulations focus on steering equipment and impose specific constraints on remote operation including maximum distance and speed limitations. The remote device maintains a detailed implementation of these standards within its control logic, ensuring that all generated control signals adhere to the specified parameters and limitations. This standards-compliant approach ensures that the vehicle's native control systems recognize and correctly interpret the commands issued by the remote device, while simultaneously maintaining regulatory compliance for all marshalling operations.

The communication interface between the remote device and the vehicle utilizes multiple protocol options to ensure compatibility across diverse vehicle platforms. The CAN bus protocol serves as a primary interface method for many vehicles, providing a standardized messaging format for controlling various vehicle systems through direct access to the internal communication network. The remote device implements the specific CAN message structures required for parking control functions, including steering, acceleration, braking, and gear selection commands. For vehicles without direct CAN access, the OBD-II interface provides an alternative connection pathway, using the standardized diagnostic port present in most modern vehicles to establish a control channel through the vehicle's onboard diagnostic systems. Wireless communication options expand compatibility further. Bluetooth connections offer energy-efficient short-range communication suitable for close-proximity operations. Wi-Fi connectivity provides higher bandwidth capabilities for applications requiring richer data exchange. Cellular technologies such as 5G and 6G standards enable extended-range operations in appropriately regulated contexts. The Vehicle-to-Everything (V2X) communication protocol provides an interface option for vehicles equipped with dedicated external communication systems, enabling direct integration with infrastructure-based control systems. For installations with extensive networking infrastructure, Ethernet connections provide high-speed, reliable data exchange with minimal latency. This diverse protocol support ensures that the remote device can establish effective communication with all vehicle types equipped with remote parking capabilities, regardless of the specific implementation approach chosen by the manufacturer.

Optionally, the at least one control unit is part of an automated valet parking system (AVPS) that manages multiple remote devices and multiple vehicles within the operational area.

The AVPS is an infrastructure-based solution for automated vehicle handling, including all aspects of the parking process from initial vehicle reception through positioning and retrieval. Herein, the control unit is employed for processing sensor data, coordinating vehicle movements, and managing the network of remote devices deployed throughout the facility. The AVPS architecture may further incorporate multiple subsystems, including dedicated modules for reservation management, resource allocation, authentication and authorization, billing and payment processing, and system monitoring and diagnostics. The reservation management component enables users to pre-book parking services through mobile applications or web interfaces. The resource allocation module optimizes the assignment of parking spaces based on current occupancy, predicted demand patterns, vehicle characteristics, and facility-specific constraints. The authentication and authorization system verifies user identities and vehicle credentials, ensuring that only authorized vehicles receive marshalling services while maintaining secure access control throughout the facility. The billing component tracks service usage and processes payments according to the facility's fee structure. The system monitoring module continuously evaluates the operational status of all AVPS components, detecting and logging any anomalies or performance issues that might require maintenance attention. This comprehensive systems approach ensures that the automated marshalling capabilities are embedded within a complete operational framework that addresses all aspects of vehicle parking management.

The present disclosure also relates to the method as described above. Various embodiments and variants disclosed above, with respect to the aforementioned system, apply *mutatis mutandis* to the method.

The present method enables automated marshalling of vehicles by establishing an integration between standardized remote parking interfaces and infrastructure-based marshalling commands. The method begins with establishing a connection between the remote device and the vehicle's remote parking interface, forming a secure communication channel through which control signals can be transmitted. This connection may be established through various communication protocols depending on the vehicle's specifications, including but not limited to CAN bus, OBD-II, Bluetooth, Wi-Fi, or proprietary interfaces specific to the vehicle manufacturer. The remote device authenticates itself with the vehicle's systems and verifies compatibility with the remote parking interface before proceeding with any control operations. This initial connection ensures that the remote device has proper authorization to issue commands to the vehicle and that the communication pathway is stable and secure.

Following the establishment of a connection, the method proceeds with the processing of tracking data collected by the plurality of sensors arranged in the operational area. This data processing step involves analyzing the raw sensor inputs to extract meaningful information about the environment, including the positions and trajectories of all vehicles and objects within the operational area. The processed data is used to generate the digital map that provides a real-time representation of the operational area's state. The digital map includes detailed information about the current location of the vehicle to be marshalled, the location of the designated parking area, and any obstacles or hazards present in the environment. The digital map is continuously updated as new sensor data becomes available, ensuring that the system maintains an accurate understanding of the operational environment at all times.

Once the digital map has been generated and the locations of the vehicle and its destination have been identified, the method proceeds with the determination of routing information. This step involves calculating an optimal path for the vehicle to follow from its current location to the designated parking area, taking into account factors such as distance, safety margins, and potential obstacles. The routing information includes a detailed trajectory plan with specific waypoints, velocity profiles, and steering instructions that will guide the vehicle safely and efficiently to its destination.

Based on this routing information, the remote device converts high-level marshalling commands into standardized control signals that are compatible with the vehicle's remote parking interface. These control signals direct the vehicle's steering, acceleration, braking, and gear selection functions to execute the planned route. Throughout the navigation process, the system continuously monitors the vehicle's progress and the state of the operational area, making real-time adjustments to the routing information and control signals as needed to ensure safe and efficient movement to the designated parking area.

Optionally, the method further comprises: enforcing a maximum vehicle movement distance of six meters from the remote device; limiting a movement speed of the vehicle to walking speed, in accordance with UNECE R79 regulations; and halting the vehicle upon detection of a communication failure or a safety hazard within the operational area. The distance limitation, speed restriction, and automatic halting capabilities ensure regulatory compliance while maintaining operational safety during all automated marshalling operations, preventing continued movement in conditions that might compromise control reliability or operational safety.

Optionally, the method further comprises: receiving supplemental data using one or more perception sensors of the remote device, wherein the supplemental data provides information about surroundings of the vehicle; and using the supplemental data to supplement the tracking data collected by the plurality of sensors when navigating the vehicle. The supplemental perception data enables more precise navigation in close-quarters situations where detailed environmental awareness from multiple perspectives improves positioning accuracy and obstacle avoidance capabilities, particularly for small objects or subtle environmental features that might be challenging to detect from distance-based fixed sensors.

Optionally, the method further comprises: determining a safety zone surrounding the vehicle based on at least one vehicle parameter; detecting when a position of an object present in the operational area lies within the safety zone; and when it is detected that the position of the object lies within the safety zone, instructing the remote device to decrease a speed of the vehicle to prevent a collision between the vehicle and the object. The speed reduction is calculated based on the distance between the object and the vehicle, with greater reductions implemented when objects are deeper within the safety zone. This preventive approach maintains separation distances while allowing operations to continue at adjusted speeds rather than requiring complete stops for all detected objects.

Optionally, the method further comprises: coordinating, by at least one control unit communicably coupled to the remote device, automated marshalling of multiple vehicles within the operational area; and dynamically adjusting the routing information for each vehicle based on positions and movements of other vehicles in the operational area. These coordinated adjustments maintain efficient traffic flow throughout the operational area while preventing movement conflicts that could result in vehicle stoppage or safety hazards.

Optionally, converting the commands into standardized control signals comprises: formatting the commands to conform to automated parking protocol standards, wherein the automated parking protocol standards comprise at least one of: ISO 12768, ISO 23374-1, and UNECE R79, and transmitting the standardized control signals using at least one of: CAN bus, OBD-II, Bluetooth, Wi-Fi, 5G, 6G, V2X, and Ethernet communication protocols to interface with the vehicle. The protocol-compliant formatting and transmission ensure that the converted commands can be correctly interpreted and executed by the vehicle control systems without requiring modifications to existing vehicle software or hardware.

The system and the method of the present disclosure facilitate automated vehicle marshalling by enabling integration between vehicles equipped with standardized remote parking interfaces and infrastructure-based marshalling systems. The system achieves this by employing the remote device that functions as the protocol converter, translating generalized marshalling commands into standardized vehicle control signals that are compatible with existing remote parking interfaces. This approach eliminates the need for vehicle modifications while still allowing for automated control of vehicle movements within operational areas. The system incorporates environmental perception capability through its network of sensors distributed throughout the operational area. The collected tracking data is processed by the at least one control unit to generate a detailed digital map of the operational area, which serves as the foundation for path planning and navigation. The system implements routing algorithms to analyse the digital map of the operational area and calculate optimal paths for vehicle movement based on multiple factors including distance, safety margins, traffic flow, and potential obstacles; and translates this routing information into specific movement commands that are then transmitted to the remote device for execution. The remote device, in turn, converts these commands into standardized control signals that are compatible with the vehicle's remote parking interface, enabling control over the vehicle's steering, acceleration, braking, and gear selection functions. This hierarchical control structure ensures accurate execution of the planned route while maintaining compliance with regulatory requirements.

The system and method of the present disclosure have wide-ranging applications across various industries and operational environments. The present system and method can be deployed in logistics centres for efficient management of delivery vehicle fleets, in automotive manufacturing facilities for handling of newly produced vehicles, in rental car facilities for automated vehicle retrieval and return processing, and in commercial parking structures for enhanced space utilization and customer convenience. The present system and method promote the efficient management of vehicular resources in diverse operational contexts by addressing the challenges associated with automated vehicle marshalling.

### DETAILED DESCRIPTION OF THE DRAWINGS

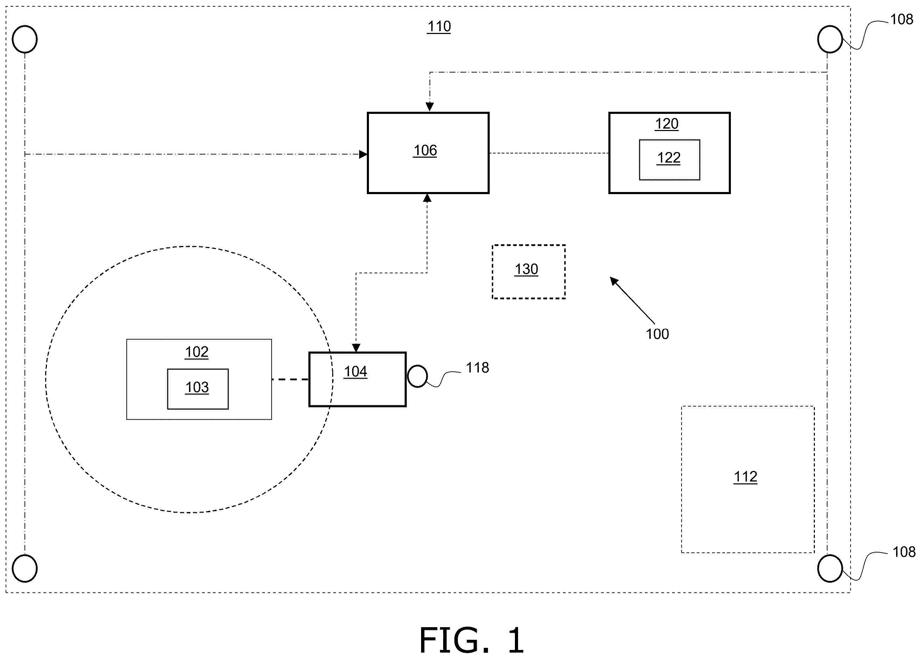

Referring to FIG. 1, illustrated is a schematic illustration of a system 100 for automated marshalling of a vehicle 102 having a remote parking interface 103, in accordance with an embodiment of the present disclosure. The system 100 comprises a remote device 104 that interfaces with the remote parking interface 103 of the vehicle 102, at least one control unit 106 communicably coupled to the remote device 104, and a plurality of sensors 108 arranged in an operational area 110 in which the vehicle 102 is present. The remote device 104 serves as a protocol converter between standardized vehicle control signals and infrastructure-based marshalling commands. The sensors 108 are positioned at strategic locations throughout the operational area 110 to provide required coverage for tracking objects and vehicles. The operational area 110 includes multiple parking areas, with a given parking area 112 designated as the destination for the vehicle 102 during the current marshalling operation. The control unit 106 processes tracking data from the sensors 108 to generate a digital map of the operational area 110 and determine routing information for navigating the vehicle 102 from its current location to the given parking area 112. The remote device 104 converts commands from the control unit 106 into standardized control signals compatible with the remote parking interface 103 of the vehicle 102, enabling automated movement of the vehicle without requiring modifications to its existing systems.

As further illustrated in FIG. 1, the remote device 104 includes one or more perception sensors 118 that provide supplementary data about the vehicle's immediate surroundings. The operational area 110 is defined by boundaries within which the automated marshalling operations take place, with the sensors 108 positioned to monitor all activity within this area. The system 100 also includes an autonomous mobile robot 130 on which the remote device 104 can be mounted, enabling the remote device 104 to approach vehicles requiring marshalling services. The dotted line surrounding the vehicle 102 and the remote device 104 represents a safety zone that is established around the vehicle during movement operations, within which object detection triggers preventive actions.

In the system 100, the sensors 108 continuously monitor the operational area 110, providing tracking data that the control unit 106 processes to generate the digital map and determine optimal routing. The remote device 104 serves as the interface between the control unit 106 and the vehicle 102, converting infrastructure-based marshalling commands into standardized vehicle control signals compatible with the remote parking interface 103. The vehicle 102 receives these signals through its remote parking interface 103 and executes the corresponding movements, following the designated path from its current location to the parking area 112. When implemented on the autonomous mobile robot 130, the remote device 104 gains mobility that enables sequential servicing of multiple vehicles without manual repositioning. The entire system 100 operates within the defined operational area 110, maintaining regulatory compliance and operational safety while optimizing vehicle movements.

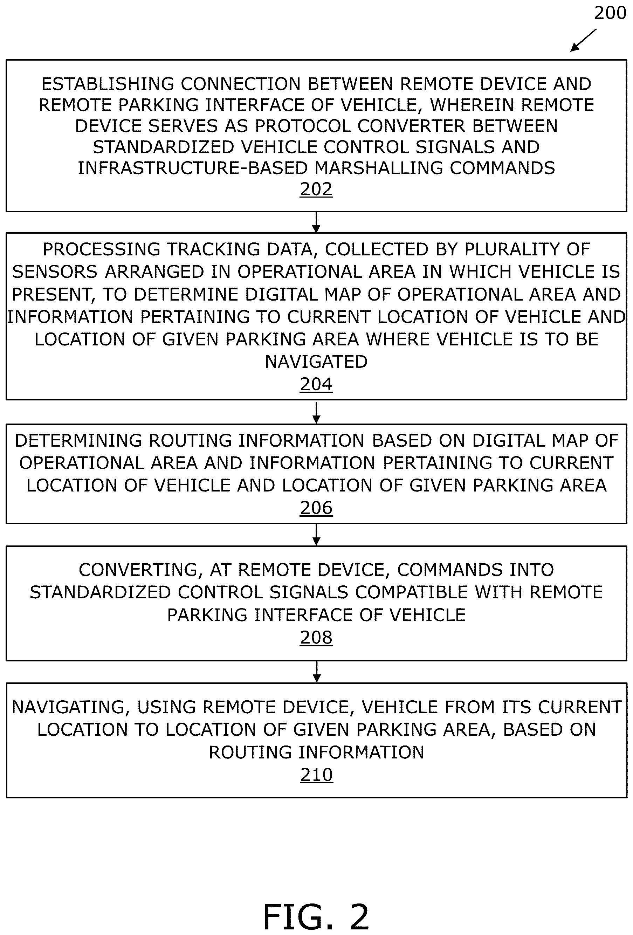

Referring to FIG. 2, illustrated is a flowchart of steps of a method 200 for automated marshalling of the vehicle 102 having the remote parking interface 103, in accordance with an embodiment of the present disclosure. At step 202, the method 200 includes establishing a connection between the remote device 104 and the remote parking interface 103 of the vehicle 102. This connection establishment creates a secure control pathway between the marshalling system and the vehicle's native control interfaces. At step 204, the method 200 includes processing tracking data collected by the plurality of sensors 108 to determine a digital map of the operational area 110 and information about the current location of the vehicle 102 and the location of the given parking area 112. This processing transforms raw sensor data into an environmental model that serves as the foundation for navigation decisions. At step 206, the method 200 includes determining routing information based on the digital map of the operational area 110 and the location information for the vehicle 102 and parking area 112. The routing determination generates an optimal path that balances efficiency with safety while respecting vehicle movement constraints. At step 208, the method 200 includes converting, at the remote device 104, the marshalling commands into standardized control signals compatible with the remote parking interface 103 of the vehicle 102. This conversion ensures that control signals conform to established protocols while maintaining compatibility with the specific vehicle implementation. At step 210, the method 200 includes navigating the vehicle 102 from its current location to the location of the given parking area 112 using the remote device 104, based on the routing information. The navigation process transforms the abstract route plan into actual vehicle movement through coordinated control signals that guide the vehicle precisely to its destination.

The aforementioned steps 202-210 are only illustrative, and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A system (100) for automated marshalling of a vehicle (102) having a remote parking interface (103), the system (100) comprising:
a remote device (104) configured to interface with the remote parking interface (103) of the vehicle (102);
at least one control unit (106) communicably coupled to the remote device (104); and
a plurality of sensors (108) arranged in an operational area (110) in which the vehicle (102) is present,
wherein the at least one control unit (106) is configured to:
process tracking data, collected by the plurality of sensors (108), to determine a digital map of the operational area (110) and information pertaining to a current location of the vehicle (102) and a location of a given parking area (112) where the vehicle (102) is to be navigated;
determine routing information based on the digital map of the operational area (110) and the information pertaining to the current location of the vehicle (102) and the location of the given parking area (112); and
navigate, using the remote device (104), the vehicle (102) from its current location to the location of the given parking area (112), based on the routing information,
**characterised in that** the remote device (104) serves as a protocol converter between standardized vehicle control signals and infrastructure-based marshalling commands; and the remote device (104) converts commands from the at least one control unit (106) into standardized control signals compatible with the remote parking interface (103) of the vehicle (102).

2. The system (100) according to claim 1, wherein the system (100) is configured to enforce a maximum vehicle movement distance of six meters from the remote device (104) and to limit a movement speed of the vehicle (102) to walking speed, in accordance with UNECE R79 regulations, and wherein the system (100) is further configured to halt the vehicle (102) upon detection of a communication failure or a safety hazard within the operational area (110).

3. The system (100) of claim 1, wherein the remote device (104) comprises one or more perception sensors (118) configured to monitor surroundings of the vehicle (102), wherein data from the one or more perception sensors (118) is used by the at least one control unit (106) to supplement the tracking data collected by the plurality of sensors (108).

4. The system (100) of claim 1, wherein the at least one control unit (106) is further configured to:
determine a safety zone surrounding the vehicle (102) based on at least one vehicle parameter;
detect when a position of an object present in the operational area (110) lies within the safety zone; and
when it is detected that the position of the object lies within the safety zone, instruct the remote device (104) to decrease a speed of the vehicle (102) to prevent a collision between the vehicle (102) and the object.

5. The system (100) of claim 1, wherein the at least one control unit (106) is further configured to:
coordinate automated marshalling of multiple vehicles within the operational area (110); and
dynamically adjust the routing information for each vehicle based on positions and movements of other vehicles in the operational area (110).

6. The system (100) of claim 1, further comprising an operator unit (120) communicably coupled to the at least one control unit (106), wherein an operator of the operator unit (120) is provided with a user interface (122), wherein the user interface (122) displays at least one of: the digital map of the operational area (110), the routing information, the current location of the vehicle, the location of the given parking area (112), and respective locations of other vehicles in the operational area (110).

7. The system (100) of claim 1, wherein the remote device (104) is implemented as at least one of: a self-powered mobile unit that can be physically attached to the vehicle (102); a vehicle-powered unit that draws power from the vehicle (102) through a connection with the remote parking interface (103); and a stationary unit positioned within the operational area (110) that wirelessly interfaces with the remote parking interface (103) of the vehicle (102).

8. The system (100) of claim 1, wherein the remote device (104) is adapted to be mounted on an autonomous mobile robot (130) that is configured to approach the vehicle (102) before establishing a connection with the remote parking interface (103) of the vehicle (102).

9. The system (100) of claim 1, wherein the remote device (104) is configured to communicate with the remote parking interface (103) of the vehicle (102) using at least one of: a wired connection and a wireless connection.

10. The system (100) of claim 1, wherein the remote device (104) converts the commands from the at least one control unit (106) into the standardized control signals that conform to automated parking protocol standards, wherein the automated parking protocol standards comprise at least one of: ISO 12768, ISO 23374-1, and UNECE R79, and wherein the remote device (104) employs at least one of: CAN bus, OBD-II, Bluetooth, Wi-Fi, 5G, 6G, V2X, and Ethernet communication protocols to interface with the vehicle (102).

11. The system (100) of claim 1, wherein the at least one control unit (106) is part of an automated valet parking system (AVPS) that manages multiple remote devices and multiple vehicles within the operational area (110).

12. A method for automated marshalling of a vehicle (102) having a remote parking interface (103), the method comprising:
processing tracking data, collected by a plurality of sensors (108) arranged in an operational area (110) in which the vehicle (102) is present, to determine a digital map of the operational area (110) and information pertaining to a current location of the vehicle (102) and a location of a given parking area (112) where the vehicle (102) is to be navigated;
determining routing information based on the digital map of the operational area (110) and the information pertaining to the current location of the vehicle (102) and the location of the given parking area (112); and
navigating, using a remote device (104), the vehicle (102) from its current location to the location of the given parking area (112), based on the routing information,
**characterised in that** the method further comprises:
establishing a connection between the remote device (104) and the remote parking interface (103) of the vehicle (102, wherein the remote device (104) serves as a protocol converter between standardized vehicle control signals and infrastructure-based marshalling commands, and
converting, at the remote device (104), commands into standardized control signals compatible with the remote parking interface (103) of the vehicle (102).

13. The method according to claim 12, further comprising:
enforcing a maximum vehicle movement distance of six meters from the remote device (104);
limiting a movement speed of the vehicle (102) to walking speed, in accordance with UNECE R79 regulations; and
halting the vehicle (102) upon detection of a communication failure or a safety hazard within the operational area (110).

14. The method of claim 12, further comprising:
receiving supplemental data using one or more perception sensors (118) of the remote device (104), wherein the supplemental data provides information about surroundings of the vehicle (102); and
using the supplemental data to supplement the tracking data collected by the plurality of sensors (108) when navigating the vehicle (102).

15. The method of claim 12, further comprising:
determining a safety zone surrounding the vehicle (102) based on at least one vehicle parameter;
detecting when a position of an object present in the operational area (110) lies within the safety zone; and
when it is detected that the position of the object lies within the safety zone, instructing the remote device (104) to decrease a speed of the vehicle (102) to prevent a collision between the vehicle (102) and the object.

16. The method of claim 12, further comprising:
coordinating, by at least one control unit (106) communicably coupled to the remote device (104), automated marshalling of multiple vehicles within the operational area (110); and
dynamically adjusting the routing information for each vehicle based on positions and movements of other vehicles in the operational area (110).

17. The method of claim 12, wherein converting the commands into standardized control signals comprises:
formatting the commands to conform to automated parking protocol standards,
wherein the automated parking protocol standards comprise at least one of: ISO 12768, ISO 23374-1, and UNECE R79, and transmitting the standardized control signals using at least one of: CAN bus, OBD-II, Bluetooth, Wi-Fi, 5G, 6G, V2X, and Ethernet communication protocols to interface with the vehicle (102).
